# EUROPEAN PATENT APPLICATION

(11) **EP 2 453 630 A1**
(43) Date of publication of application: **16.05.2012**
(21) Application number: 10851615.4
(22) Date of filing: 19.08.2010
(51) Int. Cl.: H04L 29/06

(54) **DATA CARD, DATA CARD SYSTEM AND MULTI-MEDIA SERVICE IMPLEMENTATION METHOD**

(30) Priority: 21.05.2010 CN 201010182618
(71) Applicant: ZTE Corporation, Shenzhen, Guangdong 518057 (CN)
(72) Inventor: WU, Qingliang, Shenzhen Guangdong 518057 (CN)
(74) Representative: Anderson, Angela Mary
(86) International application number: PCT/CN2010/076137
(87) International publication number: WO 2011/143857

(57) **Abstract**

The present invention discloses a data card, data card system and method for realizing multimedia service to address the problem that a mobile terminal equipment without communication network access cannot subscribe multimedia service or acquire entitlement management message. Said data card device includes an Internet access module and an EMM decryption module, and the Internet access module can connect to a multimedia service provision server via an Internet connection, and the EMM decryption module respectively connects to an Internet access module and a CAS module, wherein, the Internet access module is set to provide an Internet interface to the multimedia service provision server, and receive the encrypted EMM sent by the multimedia service provision server, and the EMM decryption module is set to decrypt the EMM received by the Internet access module and send the decrypted EMM to the CAS module.

## Description

### Technical Field

The present invention relates to the field of digital mobile multimedia broadcasting, and more particularly, to a data card, a data card system, and a method for realizing multimedia service in the data card.

### Background of the Related Art

In recent years, digital mobile multimedia broadcasting technologies, especially mobile TV technology, are developing rapidly, various standards provide mobile multimedia broadcasting terminal users with a variety of contents, such as news, sports, variety, drama, film, and other programs, the users can select service programs of the mobile multimedia broadcasting according to their hobbies.

In order to achieve paid services in the multimedia broadcasting system, the content operators need to scramble the program stream, so that only the authorized users can watch the program. After a user is authorized, he/she receives and descrambles the program stream to play.

The data card is a data service mobile terminal device used in a computer and it allows the users to use mobile data services anytime and anywhere. Adding a broadcasting signal reception chip in the data card can achieve the multimedia play, and since it has low price, it is a relatively popular receiving terminal.

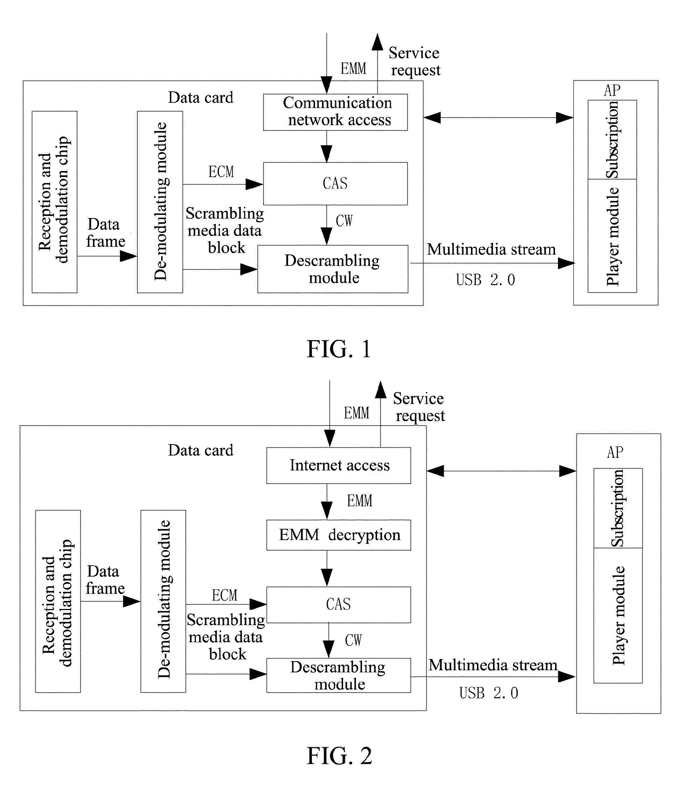

But before playing the paid multimedia service, the mobile terminal needs to purchase the related service from the service operator and to acquire the Entitlement Management Message (EMM), currently, the method for subscribing and acquiring the EMM in the mobile terminal of the data card is shown as FIG. 1. The method primarily uses the collaboration of the radio network and the mobile communication network to subscribe and play the scrambled multimedia data, and its subscription and playing system consists of two parts: a data card and an application processor (AP). The data card consists of a broadcasting signal reception and demodulation chip, a de-multiplexing module, a descrambling module, a conditional access system (CAS), and a communication network access module. The AP generally is a personal computer, Personal Digital Assistant (PDA), the Internet Assistant, and so on, and its subscription sub-module completes the subscription interaction process with the multimedia service provision server via the mobile communication network. The reception and demodulation chip is responsible for receiving and demodulating the digital broadcasting signals, after acquiring the data frames, the de-multiplexing module de-multiplexes the scrambled media data blocks and the entitlement control message (ECM), and then sends the ECM to the CAS module and sends the scrambled media data blocks to the descrambling module; the Entitlement Management Message (EMM) is transmitted to the CAS via the mobile communication network channel, and the CAS module calculates the control word (CW) based on the EMM and the ECM, after getting the CW, the descrambling module descrambles the scrambled media data blocks to get the multimedia stream, and then sends the multimedia stream to the AP player sub-module via the USB port, the AP player sub-module decodes and plays the multimedia stream.

The method sends the scrambled multimedia stream via the broadcasting network, uses the interaction feature of the mobile communication network to subscribe the multimedia service and acquire the entitlement management message, therefore, the mobile terminal in this method must have the mobile communication capability, and only it works closely with the communication network can the subscription and play of the multimedia service be achieved. When the mobile terminal does not have the mobile communication capability, this method cannot achieve the subscription and play of the scrambled multimedia service.

### Summary of the Invention

The present invention provides a data card, a data card system and a method for realizing multimedia service to address the problem that a mobile terminal equipment without the communication network access cannot subscribe multimedia service and acquire an entitlement management message.

The present invention provides a data card device comprising a broadcasting signal reception and demodulation chip, a de-multiplexing module, a descrambling module, and a conditional access system (CAS) module, it also comprises an Internet access module and an entitlement management message (EMM) decryption module, the Internet access module can connect to a multimedia service provision server through the Internet, and the EMM decryption module respectively connects the Internet access module and the CAS module, wherein:
the Internet access module is set to: provide an Internet interface to the multimedia service provision server; and receive the encrypted EMM sent by the multimedia service provision server;
the EMM decryption module is set to decrypt the EMM received by the Internet access module, and to send the decrypted EMM to the CAS module.

The data card device of the present invention might connect with an application processor (AP). The CAS module might be set to: calculate a control word (CW) according to entitlement control message (ECM) and the decrypted EMM, send the control word to the descrambling module; the descrambling module might be set to descramble the scrambled media data block according to the CW to get the multimedia stream and send the multimedia stream to the AP.

The present invention also provides a data card system comprising a data card and an application processor (AP), wherein:
the data card is set to: provide the AP with the Internet interface to the multimedia service provision server, acquire and decrypt the encrypted entitlement management message (EMM) sent by the multimedia service provision server; receive broadcasting signal, and use the decrypted EMM to acquire the multimedia stream from the broadcasting signal and send the multimedia stream to the AP;
the AP is set to: log in the multimedia service provision server based on the Internet interface provided by the data card, complete the subscription of the multimedia service; and play the multimedia stream sent by the data card.

In the system of the present invention, the data card might comprise: a broadcasting signal reception and demodulation chip, a de-multiplexing module, a descrambling module, a CAS module, an EMM decryption module and an Internet access module, wherein:
the broadcasting signal reception and demodulation chip is set to demodulate the broadcasting signal to acquire a data frame;
the de-multiplexing module might be set to de-multiplex the data frame to acquire the scrambled media data block and the ECM, send the scrambled media data block to the descrambling module, and send the ECM to the CAS module;
the Internet access module might be set to provide the interface to the multimedia service provision server, and to receive the encrypted EMM sent by the multimedia service provision server;
the EMM decryption module might be set to decrypt the EMM received from the Internet access module, and send the decrypted EMM to the CAS module;
the CAS module might be set to calculate the control word (CW) according to the ECM and the decrypted EMM, and send the CW to the descrambling module;
the descrambling module might be set to descramble the scrambled media data block according to the CW to get the multimedia stream, and send the multimedia stream to the AP.

The AP might comprise a subscription module and a player module, wherein: the subscription module might be set to log in the multimedia service provision server via the Internet interface provided by the data card, and to subscribe the service after the identification authentication,; the player module might be set to receive the multimedia stream sent by the data card, decode and play the multimedia stream.

The present invention also provides a method for realizing multimedia service in the data card, comprising:
an application processor logs in the multimedia service provision server based on the Internet interface provided by the data card, and subscribes the multimedia service;
the data card receives the encrypted entitlement management message (EMM) sent by the multimedia service provision server from the Internet interface and decrypts the received EMM;
the data card receives broadcasting signals from the broadcasting network, uses the decrypted EMM to process the broadcasting signals to acquire the multimedia stream, and sends the multimedia stream to the application processor to play.

In the method of the present invention, the application processor can log in the multimedia service provision server with the account and password to subscribe the required multimedia service.

The step of using the decrypted EMM to process the broadcasting signal to acquire the multimedia stream might comprise: de-multiplexing the entitlement control message (ECM) as well as the scrambled media data block from the broadcasting signal; calculating the control word (CW) according to the ECM and the decrypted EMM; and descrambling the scrambled media data block into a multimedia stream according to the CW.

With the method of the present invention, a solution for subscribing multimedia service via the Internet is provided to the mobile terminal with the Internet capability, and a plurality of methods for realizing multimedia service are provided to the mobile terminal.

### Brief Description of Drawings

FIG. 1 is a diagram of a method for subscribing the multimedia service and acquiring the entitlement management message via the communication network access;
FIG. 2 is a block diagram of a data card system in accordance with an embodiment of the present invention;
FIG. 3 is a flow chart of an implementation of the present invention.

### Preferred Embodiments of the Present Invention

The inventive concept of the present invention is: using the Internet connection capability of the data card device to subscribe the multimedia service and acquire the entitlement control message via the Internet, using the radio network connection function of the data card device to acquire the broadcasting signal (that is, the multimedia service data) through the broadcasting network, and playing the broadcasting signal via the AP.

Besides of the broadcasting signal reception and demodulation chip, the de-multiplexing module, the descrambling module, and the CAS module, the data card of the present invention also comprises the Internet access module and the EMM decryption module, wherein, the Internet access module is connected to the multimedia service provision server via the Internet, and the EMM decryption module is connected to the Internet access module and the CAS module respectively, wherein:
the Internet access module is set to: provide the Internet interface to the multimedia service provision server so that the AP can subscribe the multimedia service via the Internet; and receive the encrypted EMM sent by the multimedia service provision server;
the EMM decryption module is set to as decrypt the EMM received by the Internet access module, and send the decrypted EMM to the CAS module.

Specifically, the subscription module of the AP can authenticate the users with the multimedia service provision server using the private features such as certificate, account and so on, use the account and password to log in the multimedia service provision server to subscribe the required multimedia service, the multimedia service provision server sends the encrypted EMM to the data card according to the private feature information of this account, and the encrypted MME is decrypted with the EMM decryption module, and then the CAS module calculates the CW according to the ECM and the decrypted EMM, after the descrambling module gets the CW, it descrambles the scrambled multimedia data block to get the multimedia stream which is transmitted to the player sub-module of the AP to decode and play.

The multimedia service is realized with a collaborative model of the broadcasting network and the Internet. The subscription of the multimedia service and the acquisition of the EMM are implemented via the Internet, and in the Internet, certificate or the private feature information of the account is used for authentication to ensure that the device is a trusted mobile terminal, the account can be used to complete subscription, billing, and other functions, the multimedia service provision server sends the encrypted EMM according to the private feature information of the account.

The present invention will be described in detail with combination of the accompanying figures.

FIG. 2 is a block diagram of a data card system in accordance with an embodiment of the present invention. The system mainly consists of two parts: the data card and the AP, and the data card device connects to the AP via the USB, the Bluetooth or the infrared, and so on, wherein:
the data card is set to: provide the AP with the Internet interface to the multimedia service provision server, acquire the encrypted EMM sent by the multimedia service provision server; receive broadcasting signal, and use the decrypted EMM to obtain the multimedia stream from the broadcasting signal and send the multimedia stream to the AP to play;
as shown in FIG. 2, the data card consists of the broadcasting signal reception and demodulation chip, the de-multiplexing module, the descrambling module, the CAS module, the EMM decryption module and the Internet access module, wherein:
   the reception and demodulation chip is set to demodulate the broadcasting signal to acquire the data frame;
   the de-multiplexing module is set to: de-multiplex the data frame to get the scrambled media data block and the ECM, and send the scrambled media data block to the descrambling module, and send the ECM to the CAS module;
   the Internet access module is set to provide the interface to the multimedia service provision server, and receive the encrypted EMM sent by the multimedia service provision server;
   the EMM decryption module is set to decrypt the EMM received by the Internet access module, and send the decrypted EMM to the CAS module;
   the CAS module is set to calculate the CW according to the ECM and the decrypted EMM, and send the CW to the descrambling module;
   the descrambling module is set to descramble the scrambled media data block according to the CW to get the multimedia stream, and send the multimedia stream to the AP;
   the AP is set to: log in the multimedia service provision server based on the Internet interface provided by the data card, subscribe the multimedia service; and play the multimedia stream sent by the data card.

As shown in FIG. 2, the AP consists of a subscription module and a player module, wherein:
the subscription module is set to log in the multimedia service provision server via the Internet interface provided by the data card, and to subscribe the service after authentication;
the player module is set to receive the multimedia stream sent by the data card, decode and play the multimedia stream.

The multimedia service provision server in this specification is used to authenticate the AP, and after the authentication and the service subscription, send the EMM of the service subscribed by the user to the data card.

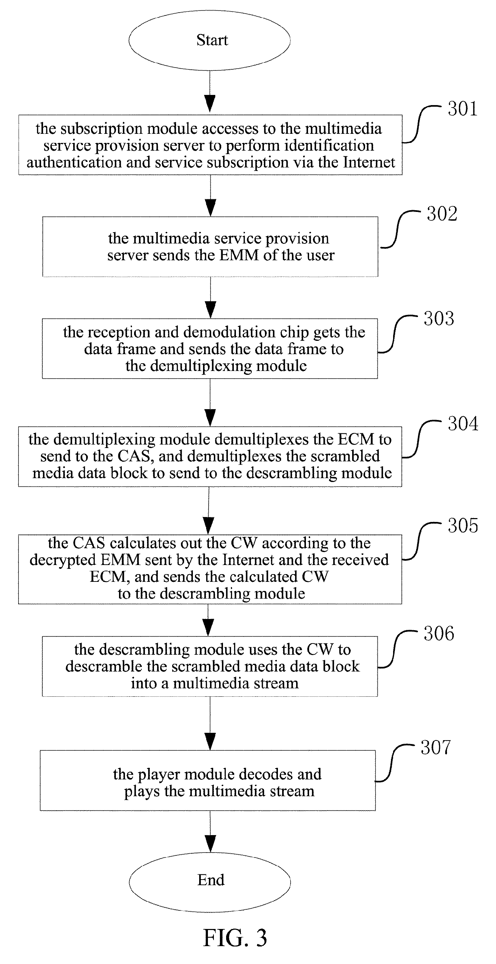

FIG. 3 is a flow chart of an embodiment of the present invention, comprising the following steps:
step 301, the subscription sub-module of the AP accesses to the multimedia service provision server to perform authentication and service subscription via the Internet access module of the data card;
based on the trigger of the subscription module, the Internet access module sends a service request (ServiceReq) to the multimedia service provision server;
step 302, the multimedia service provision server sends the EMM of the service subscribed by the user to the data card;
step 303, the reception and demodulation chip in the data card acquires the broadcasting signal to get the data frame, and sends the data frame to the demultiplexing module;
step 304, the demultiplexing module demultiplexes the ECM to send to the CAS, and demultiplexes the scrambled media data block to send to the descrambling module;
step 305, the CAS calculates the CW according to the decrypted EMM sent by the Internet and the received ECM, and sends the calculated CW to the descrambling module;
step 306, the descrambling module uses the CW to descramble the scrambled media data block into a multimedia stream;
step 307, the player module of the AP decodes and plays the multimedia stream.

Of course, the present invention might also have a variety of other embodiments, and without departing from the spirit and essence of the present invention, all types of modification or variations can be made by those skilled in the field based on the present invention, and these types of modification or variations should belong to the scope of the claims of the present invention

### Industrial Applicability

Compared with the prior art, the method and system of the present invention provide a solution for subscribing multimedia service via the Internet to mobile terminals with the Internet capability and provide a plurality of methods for realizing multimedia service to mobile terminals.

## Claims

1. A data card device, comprising a broadcasting signal reception and demodulation chip, a de-multiplexing module, a descrambling module, and a conditional access system (CAS) module, wherein, the data card device also comprises an Internet access module and an entitlement management message (EMM) decryption module, the Internet access module can connect to a multimedia service provision server through Internet, and the EMM decryption module respectively connects the Internet access module and the CAS module, wherein:
the Internet access module is set to: provide an Internet interface to the multimedia service provision server; and receive encrypted EMM sent by the multimedia service provision server;
the EMM decryption module is set to decrypt the EMM received by the Internet access module, and to send the decrypted EMM to the CAS module.

2. The data card device of claim 1, wherein:
the data card device connects with an application processor (AP).

3. The data card device of claim 2, wherein:
the CAS module is set to: calculate a control word (CW) according to entitlement control message (ECM) and the decrypted EMM, send the control word to the descrambling module;
the descrambling module is set to descramble a scrambled media data block according to the CW to get a multimedia stream and send the multimedia stream to the AP.

4. A data card system, comprising a data card and an application processor (AP), wherein:
the data card is set to: provide the AP with an Internet interface to a multimedia service provision server, acquire and decrypt encrypted entitlement management message (EMM) sent by the multimedia service provision server; receive broadcasting signals, and use the decrypted EMM to acquire a multimedia stream from the broadcasting signals and send the multimedia stream to the AP;
the AP is set to: log in the multimedia service provision server based on the Internet interface provided by the data card, complete a subscription of multimedia service; and play the multimedia stream sent by the data card.

5. The system of claim 4, wherein, the data card comprises: a broadcasting signal reception and demodulation chip, a de-multiplexing module, a descrambling module, a conditional access system (CAS) module, an EMM decryption module and an Internet access module, wherein:
the broadcasting signal reception and demodulation chip is set to demodulate the broadcasting signals to acquire data frames;
the de-multiplexing module is set to de-multiplex the data frames to acquire a scrambled media data block and entitlement control message (ECM), send the scrambled media data block to the descrambling module, and send the ECM to the CAS module;
the Internet access module is set to provide an interface to the multimedia service provision server, and to receive the encrypted EMM sent by the multimedia service provision server;
the EMM decryption module is set to decrypt the EMM received from the Internet access module, and send the decrypted EMM to the CAS module;
the CAS module is set to calculate a control word (CW) according to the ECM and the decrypted EMM, and send the CW to the descrambling module;
the descrambling module is set to descramble the scrambled media data block according to the CW to get a multimedia stream, and send the multimedia stream to the AP.

6. The system of claim 4, wherein, the AP comprises a subscription module and a player module, wherein:
the subscription module is set to log in the multimedia service provision server via the Internet interface provided by the data card, and subscribe service after an identification authentication;
the player module is set to receive the multimedia stream sent by the data card, and decode and play the received multimedia stream.

7. A method for realizing multimedia service in a data card, comprising:
an application processor logging in a multimedia service provision server based on an Internet interface provided by the data card, and subscribing the multimedia service;
the data card receiving encrypted entitlement management message (EMM) sent by the multimedia service provision server from the Internet interface and decrypting the received EMM;
the data card receiving broadcasting signals from a broadcasting network, using the decrypted EMM to process the broadcasting signals to acquire a multimedia stream, and sending the acquired multimedia stream to the application processor to play.

8. The method of claim 7, wherein:
in the step of logging in the multimedia service provision server to subscribe the multimedia service, the application processor can log in the multimedia service provision server with a account and password to subscribe required multimedia service.

9. The method of claim 7, wherein:
the step of using the decrypted EMM to process the broadcasting signals to acquire the multimedia stream comprises:
de-multiplexing entitlement control message (ECM) as well as a scrambled media data block from the broadcasting signals;
calculating a control word (CW) according to the ECM and the decrypted EMM; and
descrambling the scrambled media data block into a multimedia stream according to the CW.
